Europäisches Patentamt

European Patent Office

Office européen des brevets

(11) Publication number: **0 138 400**
**B1**

(12) **EUROPEAN PATENT SPECIFICATION**

(45) Date of publication of patent specification: **23.11.88**

(51) Int. Cl.⁴: **G 02 B 26/10**

(21) Application number: **84306327.2**

(22) Date of filing: **14.09.84**

(54) Optical scanning apparatus including polygonal scanning mirror assembly.

(30) Priority: **15.09.83 US 532323**

(43) Date of publication of application:
**24.04.85 Bulletin 85/17**

(45) Publication of the grant of the patent:
**23.11.88 Bulletin 88/47**

(84) Designated Contracting States:
**DE FR GB IT**

(56) References cited:
**EP-A-0 021 852**
**FR-A-2 517 078**
**US-A-3 897 132**

(73) Proprietor: **XEROX CORPORATION**
**Xerox Square - 020**
**Rochester New York 14644 (US)**

(72) Inventor: **Brueggemann, Harry P.**
**980 Sherwood Road**
**San Marino California 91108 (US)**

(74) Representative: **Goode, Ian Roy et al**
**Rank Xerox Limited Patent Department 364**
**Euston Road**
**London NW1 3BL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an optical scanning apparatus of the kind which includes a scanning mirror assembly comprising a polygonal array of mirror facets arranged for rotation about an axis, a light source for directing a beam of light towards said mirror assembly, said light being initially reflected in turn by each of said facets on rotation of said scanning mirror, a first stationary mirror in the path of light reflected from said facets, a second stationary mirror in the path of light reflected from the first mirror, said second mirror reflecting light back to the same facet of the scanning mirror assembly as said initial reflection for a second reflection therefrom, said second reflection from said facet producing a scanning light beam.

Scanning systems in modern day apparatus are becoming more accurate on the one hand but more complicated and expensive on the other hand. In certain raster scanning optical image systems, a collimated source of light, as from a laser and associated optical lenses, impinges on a rotating polygon scanner, which by the rotational movement thereof causes the reflected light to revolve about an axis near the center of rotation of the rotating polygon. This reflected light can be utilized to scan a document at the input end of an imaging system or can be used to impinge upon a photosensitive medium, such as a xerographic drum in the output mode. Many systems have been disclosed in the art to overcome various optical and other distortions in the optical flying spot imaging system.

For example, in U.S. Patent 4,247,160, entitled "Scanner with Reflective Pyramid Error Compensation", issued to the same inventor and assignee as the present application, a laser beam scanner is disclosed having a positive cylinder mirror located between the polygon scanner and the photosensitive surface. The positive cylinder mirror, which has power in the cross scan plane but no power in the scan plane itself, minimizes scan to scan spot position errors due to angular alignment errors between adjacent facets of the polygon scanner without introducing significant cross scan field curvature. Further, this cylinder lens can be used to correct the effect of wobble introduced into the system by inaccuracies in the bearings, utilized to impart motion between the motor and the rotating polygon, and to the grinding or polishing of the actual facets on the faces of the rotating polygon itself. The wobble effects cause an uneven raster scan which produces irregular locations of the output scan lines whether utilized in an input or output fashion.

Canon Kabushiki Kaisha of Tokyo has eliminated the need for wobble correction by improving the tilt accuracy of the polygon facets to five arc-seconds, and by reducing the distance from the facet to the photoreceptor. See Minami, S. and Minoura, K., Proc. SPIE Optical Systems Engineering, Vol. 193, pp. 202—208 (1979). Since wobble is an angular error, reducing this distance reduces the lateral displacement due to wobble. The distance is reduced by decreasing the number of facets, thereby increasing the scan angle for each facet, and decreasing the lens focal length for a given scan. In this paper, the writers indicate the use of an eight-facet polygon.

Eliminating cylinder lenses (1) removes the need to independently focus the scan and cross-scan planes, thus reducing alignment time, (2) reduces the number of lens elements, and (3) uses only rotationally symmetric (spherical) lenses which are cheaper to make than cylinders, greatly cutting fabrication and assembly costs. In addition, the short polygon-photoreceptor distance that Canon uses virtually eliminates the need for folding mirrors, and an eight-facet polygon is cheaper than an 18 facet polygon. By increasing the cost, or paying more for the use and manufacture of the polygon, the cost of the rest of the scanner system is reduced.

Workers at AGFA-Gevaert used double reflection at the facet to cancel wobble. After reflection from a facet, the beam is returned to the same facet by an arrangement of mirrors, for a second reflection. See Meeussen, et al, U.S. Patent 3,897,132, assigned to AGFA-Gevaert. If there are an even number of reflections between facet reflections, wobble introduced at the first reflection is cancelled at the second. The cancellation is exact at the center of scan, where the wobble angle at the second reflection has the same value as the wobble angle at the first reflection. As the facet is rotated from the center of scan, the wobble angle at the second reflection is less than at the first, and cancellation is no longer exact. But over a polygon rotation angle, wobble correction is nearly exact.

The Meeussen patent defines wobble as a deviation of the facet from parallelism with the axis of rotation. Thus, Meeussen's facet must be parallel to the axis and the patent does not consider draft angles. When the beam is offset in the cross-scan direction with a zero-draft angle polygon, bow is inevitable. If the embodiment in the Meeusen patent is analyzed, it can be shown that wobble is well corrected over the scan, but bow is excessive. The ends of a 23 cm scan line are displaced at least 2 cm from the center of scan in the cross-scan direction.

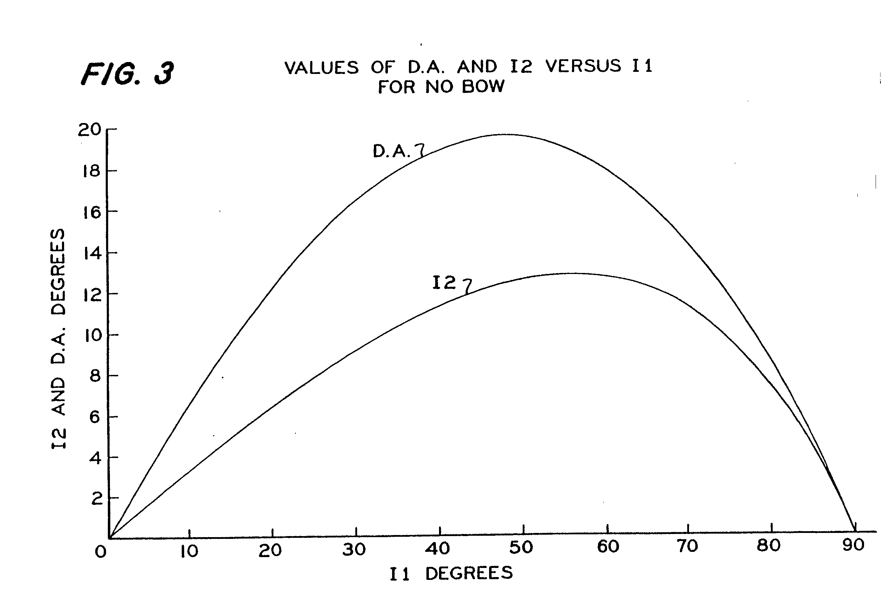

The present invention is intended to provide a polygon scanning apparatus in which wobble and bow are substantially eliminated, and accordingly provides an apparatus of the kind specified which is characterised in that for a mirror assembly having said mirror facets inclined at a predetermined draft angle (D.A.) to the axis of rotation of the scanning mirror assembly, said beam of light from said source is inclined at an angle $l1$ with the normal to the surface of said facets, and said second mirror reflects said light back to said surface of said facets at an angle $l2$ with the same normal to said surface of said facets; the draft angle, the angle $l1$, and the angle $l2$ being approximately in accordance with their values read from the graphs in Figure 3.

The apparatus of the invention has the advantage that it provides a polygon system for correcting wobble by double reflection from the active facet without bow. Instead of the impinging light source being transverse to the axis of rotation of a rotating polygon, this rotating polygon having facets essentially parallel to the axis of rotation, there is disclosed a light source almost parallel to the axis of rotation, impinging upon a rotating polygon with the facets having the predetermined draft angle wherein by two further reflections, the light is then reimpinged upon the same facet, wobble is similarly corrected, but not with no effects of bow.

For a more complete understanding of the invention, reference may be had to the following detailed description of the invention in conjunction with the drawings wherein:

Figure 1 is a representative schematic diagram of the rotating polygon system in accordance with the principles of the present invention;

Figures 2a and 2b show, respectively, the front and top views of a rotating polygon system as could actually be built; and

Figures 3 and 4 are representative curves showing the various relationships between the various angles of the mirror and reflective surfaces of the present invention.

In order to reduce the effects of bow, the inventor herein has discovered the various relationships between the three design variables, (1) angle of incidence at the first reflection, (2) angle of incidence at the second reflection, and (3) the draft angle, which yields perfect correction for bow over a scan angle of about 60 degrees (30 degrees on each side of the center of scan). These relations cover all possible designs.

Mathematically, bow can be expressed by a power series equation:

$$B = aS^2 + bS^4 + cS^6 \ldots$$

where B is the deviation of the scan line from straightness, S is the scan angle, a is the coefficient of the second order term, b is the coefficient of the fourth order term, c is the coefficient of the 6th order term, and so on. Since bow is symmetrical about the center of scan, there are only even powers in this power series. Odd powers cannot exist since they change in sign when S changes sign and symmetry would be destroyed.

The largest effect comes from the second order term. If a is zero, bow is zero over several degrees near the center of scan. The curve labeled I2 in Figure 3 shows the relation between the angles of incidence, which make the coefficient of the second order term a equal to zero. In this curve, the angle of incidence at the second reflection (I2) is plotted against the angle of incidence at the first reflection (I1). The draft angle has no effect on the second order term. By keeping scan angles small, the higher order bow can be kept under 0.25 mm at the ends of the scan, which is not perceived over a distance of 25. cm.

If, in addition, B is zero, bow is zero over twenty or thirty degrees from the center of scan, and insignificant over even larger scan angles. This removes the constraint on scan angles. The curve labeled D.A. in Figure 3 shows the relation between the angles of incidence and the draft angle (D.A.) which makes the coefficient b equal to zero. The residual sixth order bow is insignificant for any except the most extreme scanner applications.

In a practical embodiment of this invention, it is not necessary to make bow exactly equal to zero. If the relationships of Figure 3 are approximately met, bow will be small enough to be acceptable in many applications.

An example design was developed which satisfied the two relations shown in Figure 3. The value of I1 was 80.6295 degrees, I2 was 7.0 degrees and D.A. was 8.01 degrees. Over a 20 degree scan, writing a line 23 cm long, bow was everywhere less than 0.05 μm.

An advantage of the present invention is that it corrects the effect of facet wobble by a less expensive method than used heretofore. Wobble correction is perfect at the center of scan, because any angular deviation of the beam at the first reflection, due to facet wobble, is exactly removed at the second reflection. But away from the center of scan, the beam at the first reflection is not in the same plane as it is at the second reflection. The facet has a different angular tilt in each plane, the net effect being that the angular deviation of the beam at the first reflection is not quite cancelled at the second reflection. This leaves some residual wobble, which is proportional to the square of the scan angle. The equation is:

$$W = kS^2g$$

where W is the wobble in milliradians, k is the coefficient of the second order term in the units of milliradians/(radians of scan)$^2$(milliradians of facet wobble), S is the scan angle in radians, and g is the facet wobble in milliradians. The scan angle is the direction of the beam after the second reflection from the facet, referenced to the center of scan as zero. The power series is not carried out to higher order terms because the second order term is so large, and there is no effective way to terminate the second order term.

Wobble is a function of scan angle and I1 only, in the power series equation. It is affected very little by changing the values of I2 and D.A. although, of course, bow is strongly affected by these values of I2 and D.A. as well as I1.

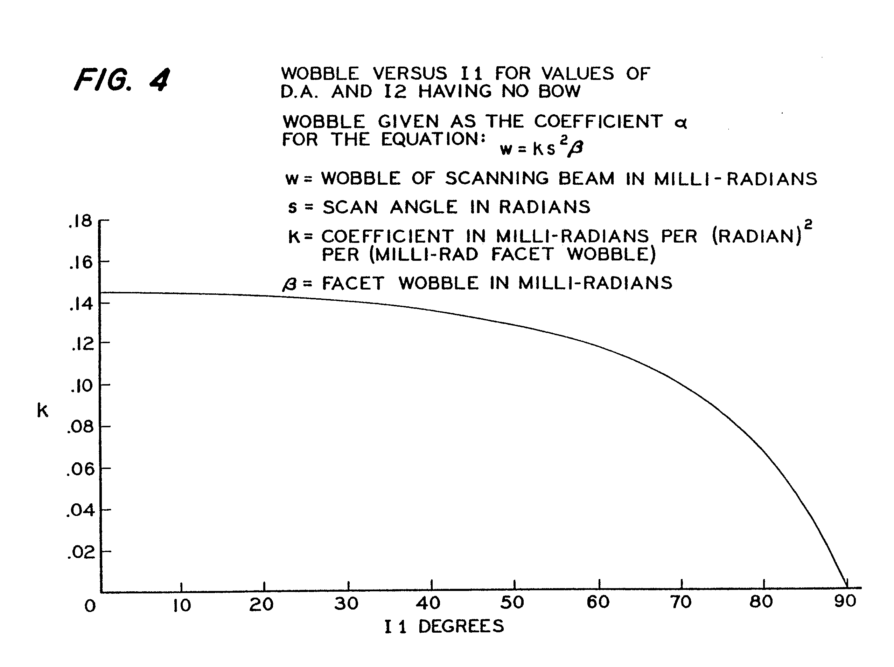

The value of the coefficient k is shown in Figure 4 as a function of I1. It goes from the value of 0.145 at I1 = 0, to 0 at I1 = 90°. The value of I1 = 90° is not a useful point, because the scan angle is always 0 and the scanner cannot scan. However, it is evident from the figure that wobble is reduced for a given scan angle, when the angle of incidence at the first reflection is large.

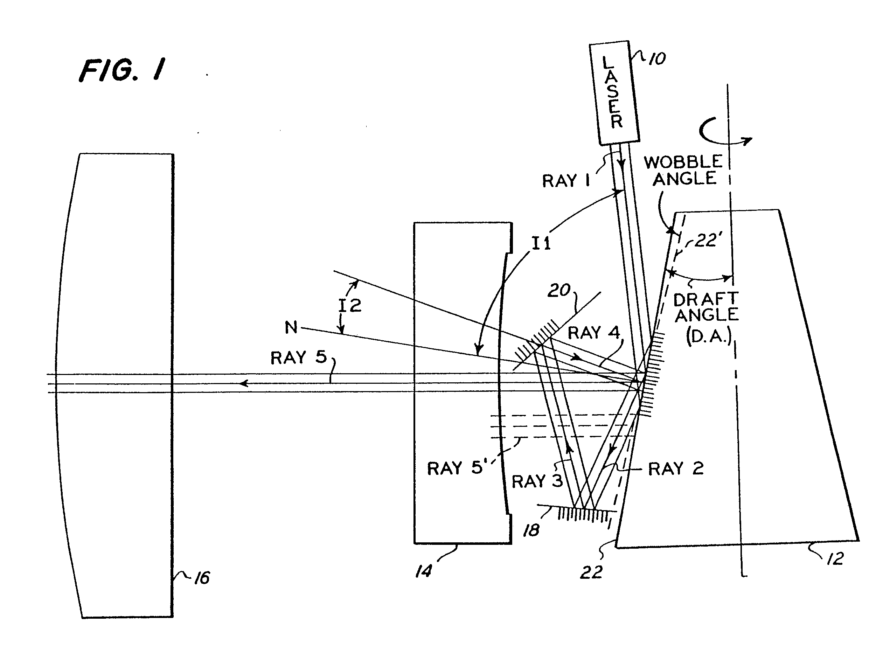

An example of the present invention is seen in Figure 1, which is a section through the center of scan. Rotating polygon 12 is seen to rotate about a line denoted as center line. This polygon could have any number of facets, while for this application, the rotating polygon has eight distinct facets. Rather than having the plane of each facet parallel to the axis of rotation, or the center line as shown, as shown by Meeussen, the facets are tilted at an angle toward the center line at an angle denoted as the "draft angle" (D.A.). Impinging upon one facet 22 of rotating polygon 12, is the light from laser 10. No optics are shown between the laser 10 and facet 22 for ease of illustration, but certain optics could be necessary depending upon the type of laser chosen. Ray 1 coming from the laser is co-planar with the center line, and is directed to facet 22 of rotating polygon 12. The light strikes the polygon and is reflected off with the normal angle of incidence equalling the angle of reflection. The angle I1 is defined in Figure 1 as the angle between laser ray 1 and the surface of facet 22 as measured from the normal N to the surface 22.

For this definition of I1, the normal to the facet 22 is taken to be in the plane of the paper, and is co-planar with the centerline and with ray 1. This position of the normal is defined as the center of scan. After the light is reflected by facet 22, it travels to mirror surface 18. Thus, ray 2 is ray 1 reflected by facet 22. Whereas ray 1 is stationary in space regardless of the position of the polygon, ray 2 rotates as the polygon rotates. Mirror surface 18 must be large enough in the direction perpendicular to the paper so that ray 2 strikes it at all times during the active scan of facet 22. Ray 2 is reflected from mirror surface 18, and is shown as ray 3. From surface 18 the ray 3 travels to mirror surface 20, from which it is reflected as ray 4, seen in Figure 1. Since ray 3 is rotating at the same angular rate as ray 2, the mirror surface 20 must be even larger than surface 18 to reflect ray 3 during active scan, because surface 20 is optically further from the facet 22 than surface 18. Ray 4 now travels back to surface 22, still with the same angular rate it had after being reflected from 22 as ray 2. Facet 22 must be even larger than mirror surface 20, in the direction of the scan, to intercept all positions of ray 4. The spacing between mirrors 18 and 20, and facet 22, must be kept small so that the mirrors and facet do not become too large. One skilled in the art of designing underfilled facet scanners will know how to choose the correct values of the laser beam parameters, so that the mirrors and the polygon do not become too large.

Ray 4 has many angles of incidence with facet 22 during the scan, because it rotates as the polygon rotates. Only one of these angles is defined as I2 in Figures 1 and 3, this is the angle between ray 4 and the normal to facet 22 is in the plane of the paper as in Figure 1. After reflection again by facet 22, ray 4 becomes ray 5, which is the ray that is corrected for facet-to-facet wobble, and at the same time has no bow.

The property possessed by ray 5 that makes it corrected for wobble and free of bow, is that when it is projected onto the plane of the paper (center of scan position) of Figure 1, it is always parallel to itself. At various positions during the active scan the ray 5 moves over the surface of facet 22, and its projection onto the center of scan position will be translated from the position of ray 5, but it will remain parallel to itself during this translation. If the facet following facet 22 (facet 22') has a different draft angle than facet 22, or if the bearings supporting the polygon impart a tilt to the center line, the projection of ray 5' from facet 22' will be displaced from the projection of ray 5, as shown in Figure 1. But ray 5' will be parallel to ray 5.

The beam surrounding ray 1 is collimated, all rays of the beam are parallel to each other. Mirror surfaces 18 and 20, as well as the facet 22, are all flat surfaces, with no optical power. Thus the beam surrounding ray 5 is still collimated. A scan lens following the facet 22 will focus the parallel rays of the collimated beam around ray 5 as a small spot at a document or a photosensitive surface.

The projection of ray 5' and the collimated beam around it are all parallel to the projection of ray 5, and thus will also focus at the same small spot as the beam around ray 5. Since the projection onto the plane of the paper of all rays is the same point at the document or the photosensitive surface, then in three-dimensional space they must all lie on a straight line perpendicular to the plane of the paper. This is the scan line at the document or photosensitive surface, and since it is straight, it has no bow. Facet 22' may have a different draft angle than facet 22, but the scan from facet 22' is superimposed over the scan of facet 22, thus there is no wobble at the document or photosensitive surface.

For the conventional polygon whose facets are parallel to the axis of rotation, the angular velocity of a ray reflected from a facet of this polygon is constant, when the angular velocity of the polygon itself is constant. For the present invention, the angular velocity of ray 5 is constant. It is slower at the ends of scan than at the center of scan, even though the angular velocity of the polygon is constant. If the scan lens following the conventional polygon has no optical distortion, the velocity of the scanning spot at the document or photosensitive surface is not constant. It travels faster at the ends of scan than at the center of scan, because the spot is a greater distance from the polygon at the ends of scan than at the center. An advantage of the present invention is that the spot velocity at the end of scan is closer to the velocity at the center of scan. Not as much optical distortion need be designed in the scan lens as for the scan lens of the conventional polygon.

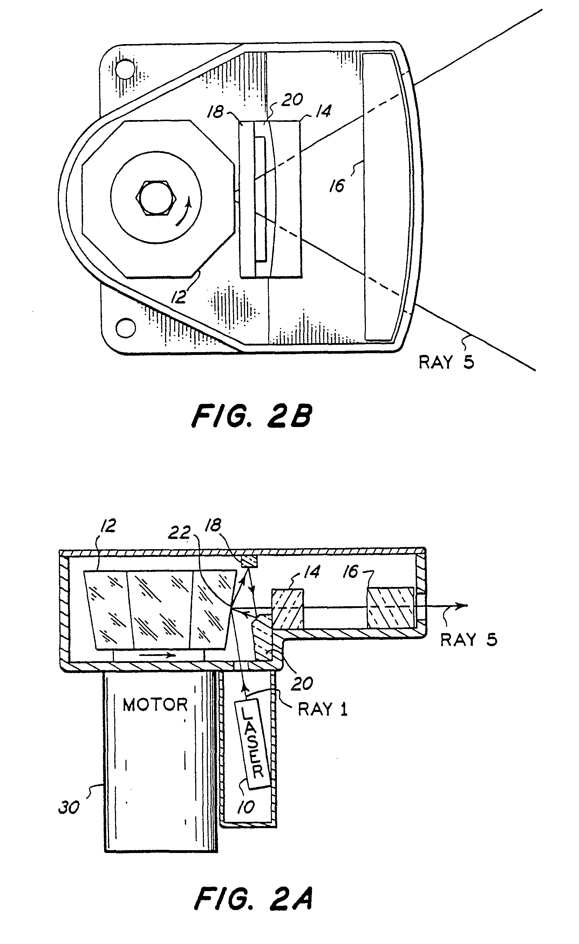

Referring now to Figures 2a and 2b, an actual reduction to practice of the schematic diagram of Figure 1 is shown. Figure 2a shows the side view wherein motor 30 on an axis turns rotating polygon 12 in the direction shown by the arrow. Laser 10 emits light ray 1 which is directed towards the facet surface 22 wherein the light is reflected towards mirror surface 18. The light is then reflected towards mirror 20 where it is then reflected back toward facet 22. After the light is impinged upon facet 22 again for the second time, the light is directed out toward the right as ray 5. For ease of illustration, rays 2 to 4 are not delineated as such but the light paths are shown clearly. Lenses 14 and 16 are seen in Figure 2a. Figure 2b shows the top view of the system shown and described in conjunction with Figure 2a wherein can be seen the rotating polygon 12, reflecting surfaces 18 and 20, together with lenses 14 and 16. Due to the draft angle of the lens 12, the output light from laser 10 is then scanned through part of the rotational travel of the mirror as shown in Figure 2b.

**Claims**

1. Optical scanning apparatus including a scanning mirror assembly (12) comprising a polygonal array of mirror facets (22) arranged for rotation about an axis, a light source (10) for directing a beam of light (RAY 1) towards said mirror assembly, said light being initially reflected (RAY 2) in turn by each of said facets (22) on rotation of said scanning mirror, a first stationary mirror (18) in the path of light reflected from said facets, a second stationary mirror (20) in the path of light (RAY 3) reflected from the first mirror, said second mirror reflecting light (RAY 4) back to the same facet of the scanning mirror assembly as said initial reflection for a second reflection therefrom, said second reflection from said facet producing a scanning light beam (RAY 5), characterised in that for a mirror assembly having said mirror facets (22) inclined at a predetermined draft angle (D.A.) to the axis of rotation of the scanning mirror assembly, said beam of light from said source (RAY 1) is inclined at an angle I1 with the normal (N) to the surface of said facets, and said second mirror reflects said light back to said surface of said facets at an angle I2 with the same normal to said surface of said facets, the draft angle (D.A.), the angle I1, and the angle I2 being approximately in accordance with their values read from the graphs in Fig. 3.

2. The apparatus of claim 1 wherein I1 is a large angle.

3. The apparatus of claim 2 wherein I1 is greater than 80° but less than 90°.

**Patentansprüche**

1. Optische Abtastvorrichtung mit einer Abtastspiegelanordnung (12) mit einer zur Drehung um eine Achse angeordneten Polygonspiegelflächenanordnung (22), einer Lichtquelle (10), um ein Lichtbündel (RAY 1) in Richtung zu der genannten Spiegelanordnung zu lenken, wobei das genannte Licht anfangs der Reihe nach von jeder der genannten Flächen (22) bei Drehung des genannten Abtastspiegels reflektiert (RAY 2) wird, einem ersten, ortsfesten Spiegel (18) in dem von den genannten Flächen reflektierten Lichtweg, einem zweiten, ortsfesten Spiegel (20) in dem von dem ersten Spiegel reflektierten Lichtweg (RAY 3), wobei der genannte zweite Spiegel Licht (RAY 4) zu derselben Fläche der Abtastspiegelanordnung bei der genannten anfänglichen Reflexion für eine zweite Reflexion von dieser reflektiert und die genannte zweite Reflexion von der genannten Fläche ein Abtastlichtbündel (RAY 5) erzeugt, dadurch gekennzeichnet, daß bei einer Spiegelanordnung mit den genannten Spiegelflächen (22), die unter einem vorbestimmten Verjüngungswinkel (D.A.) zu der Drehachse der Abtastspiegelanordnung geneigt sind, das genannte Lichtbündel von der genannten Quelle (RAY 1) unter einem Winkel I1 zur der Normalen N auf die Oberfläche der genannten Flächen geneigt ist und der genannte zweite Spiegel das genannte Licht zu der genannten Oberfläche der genannten Flächen unter einem Winkel I2 zu derselben Normalen auf die genannte Oberfläche der genannten Flächen reflektiert, wobei der Verjüngungswinkel (D.A.), der Winkel I1 und der Winkel I2 ungefähr mit den der grafischen Darstellung in Fig. 3 entnehmbaren Werten übereinstimmen.

2. Vorrichtung nach Anspruch 1, bei der I1 ein großer Winkel ist.

3. Vorrichtung nach Anspruch 2, bei der I1 größer als 80° aber kleiner als 90° ist.

**Revendications**

1. Appareil de balayage optique comportant un miroir de balayage (12) comprenant un réseau polygonal de facettes réfléchissantes (22) disposées de façon à tourner autour d'un axe, une source de lumière (10) pour diriger un faisceau lumineux (RAYON 1) vers le miroir, la lumière étant initialement réfléchie (RAYON 2) tour à tour par chacune des facettes (22) lors de la rotation du miroir de balayage, un premier miroir fixe (18) dans le trajet de la lumière réfléchie par les facettes, un second miroir fixe (20) dans le trajet de la lumière (RAYON 3) réfléchie par le premier miroir, le second miroir renvoyant la lumière (RAYON 4) vers la même facette du miroir de balayage que la réflexion initiale pour une seconde réflexion sur cette facette, la seconde réflexion sur la facette produisant un faisceau lumineux de balayage (RAYON 5), caractérisé en ce que pour un miroir comportant les facettes réfléchissantes (22) inclinées à un angle de dépouille prédéterminé (A.D.) par rapport à l'axe de rotation du miroir de balayage, le faisceau lumineux provenant de la source (RAYON 1) est incliné suivant un angle I1 par rapport à la normale (N) à la surface des facettes, et le second miroir renvoie la lumière vers la surface des facettes suivant un angle I2 avec la même normale à la surface des facettes, l'angle de dépouille (A.D.), l'angle I1 et l'angle I2 étant approximativement conformes aux valeurs lues dans les graphiques de la figure 3.

2. Appareil selon la revendication 1, dans lequel I1 est un angle de valeur élevée.

3. Appareil selon la revendication 2, dans lequel I1 a une valeur supérieure à 80° mais inférieure à 90°.

FIG. 1

LASER 10

RAY 1

WOBBLE ANGLE

22'

I1

DRAFT ANGLE (D.A.)

20

I2

RAY 4

N

RAY 5

RAY 5'

RAY 3

RAY 2

18

14

22

16

12

EP 0 138 400 B1

FIG. 2B

FIG. 2A

2

FIG. 3

VALUES OF D.A. AND I2 VERSUS I1
FOR NO BOW

EP 0 138 400 B1

FIG. 4

WOBBLE VERSUS I1 FOR VALUES OF D.A. AND I2 HAVING NO BOW

WOBBLE GIVEN AS THE COEFFICIENT α FOR THE EQUATION:

$$w = k s^2 \beta$$

w = WOBBLE OF SCANNING BEAM IN MILLI-RADIANS

s = SCAN ANGLE IN RADIANS

k = COEFFICIENT IN MILLI-RADIANS PER $(RADIAN)^2$ PER (MILLI-RAD FACET WOBBLE)

β = FACET WOBBLE IN MILLI-RADIANS

k

I 1 DEGREES

EP 0 138 400 B1